# EUROPEAN PATENT SPECIFICATION

(11) **EP 1 630 807 B1**
(45) Date of publication and mention of the grant of the patent: **13.08.2008**
(21) Application number: 05255262.7
(22) Date of filing: 26.08.2005
(51) Int. Cl.: G11B 17/04, G11B 33/00, G11B 33/02

(54) **Door-safety apparatus and disc player having the same**
Türsicherheitsvorrichtung and Plattenspieler mit derselben
Porte avec verrouillage de sécurité et lecteur de disques

(30) Priority: 31.08.2004 KR 2004069061
(43) Date of publication of application: 01.03.2006
(73) Proprietor: Samsung Electronics Co., Ltd., Suwon-si, Gyeonggi-Do (KR)
(72) Inventor: Bae, Sang-Jin, Yeongtong-gu Suwon-si Gyeonggi-do (KR)
(74) Representative: Waddington, Richard

(56) References cited:
- JP-A- 5 101 629
- US-A1- 2004 004 785

## Description

The present invention relates to a disc player, such as a CD-ROM driver, a video disc device, a digital audio disc device, a DVD player, or the like, recording information on and/or reproducing information from a disc, and more particularly, to a door-safety apparatus to prevent a door through which a disc tray passes from being forcibly opened, and a disc player having the same.

In general, disc players record information on, and/or reproduce information from, a disc-shaped recording medium. Such a disc player includes a door that opens and closes an opening formed at a front panel so that a disc tray goes into and out of a body. The door is classified into a single body type door forming a single body with a disc tray and a separate body type door separating from the disc tray.

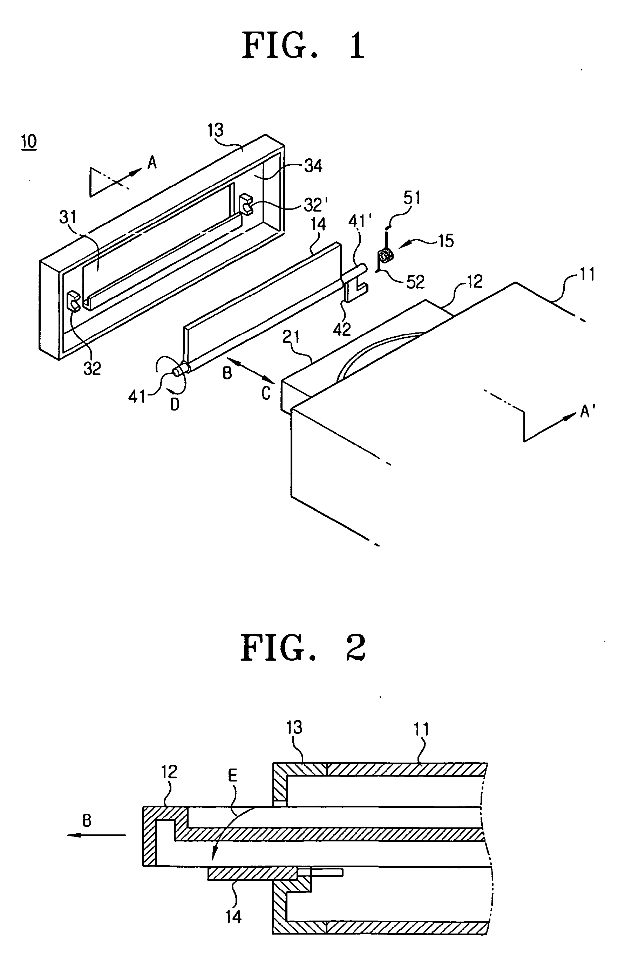

FIGS. 1 and 2 illustrate a conventional disc player including a separate body type door.

A disc player 10 includes a body 11, a disc tray 12, a front panel 13, a door 14, and a torsion spring 15. The disc tray 12 is combined with the body 11 to slide into and out of the body 11 in first movement directions indicated by reference characters B and C shown in FIG. 1 so as to mount a disc thereon. The front panel 13 is assembled with a front portion of the body 11. The front panel 13 includes an opening 31 through which the disc tray 12 passes, supporters 32 and 32' with which the door 14 is combined, and a back surface 34 to which a first arm 51 of the torsion spring 15 is fixed.

When the disc tray 12 is inserted into the body 11 in a disc loading position in which the disc is to be loaded, the door 14 covers the opening 31 so that the interior of the body 11 is not exposed. Left and right hinge arms 41 and 41' are formed at both ends of the door 14 to be rotatably combined with the supporters 32 and 32'.

A regulator 42 is formed at the right hinge arm 41' and contacts the back surface 34 of the front panel 13 so that the door 14 cannot rotate when the disc tray 12 is inserted into the body 11, and thus, closing the door 14. The torsion spring 15 is inserted into the right hinge arm 41'. The first arm 51 is combined with the back surface 34 of the front panel 13, and a second arm 52 is combined with the regulator 42 so that the torsion spring 15 applies an elastic force to the door 14 so as to rotate the door 14 in the direction D along which the door 14 is to be closed.

In the above-described structure, when the disc tray 12 is inserted into the body 11 to be in the disc loading position, the door 14 is closed by the elastic force of the torsion spring 15 and the contact between the regulator 42 and the back surface 34 of the front panel 13. Thereafter, when the disc tray 12 slides in the first movement direction B to mount the disc, a front surface 21 of the disc tray 12 contacts the door 14 to push the door 14 so as to rotate the door 14 in the direction E along which the door 14 is to be opened as illustrated in FIG. 2. Next, the disc tray 12 comes out of the body 11 through the opening 31 to be in an unloading position in which the disc is to be unloaded. When the disc tray 12 slides in the first movement direction C when the disk tray is inserted into the body 11, the door 14 rotates in the direction D due to the elastic force of the torsion spring 15 causing the door to be closed again.

However, in the disc player 10, the door 14 is closed only by the elastic force of the torsion spring 15. Thus, when the disc tray 12 is inserted into the body 11, and then the disc player 10 operates, a child or a user may forcibly open the door 14 by accident. In this case, a safety-related accident may occur because the disc that is rotating at a high speed.

Recently, disc players tend to rotate a disc at a high speed in order to facilitate large information storage capacity and high speed transmission of information. In other words, the revolution speed of discs reaches 52X speed from 1X speed through 16X speed and 32X speed. In a case where the rotation speed of a disc is 16X speed, the disc rotates at about 3600 revolution per minute (RPM). In a case where the revolution speed of the disc is 52X speed, the disc rotates at about 12,000 RPM.

In these cases, when a child or a user touches a disc that is rotating at a high speed with his or her hand, the child or the user may get injured by the disc. Also, when the child or the user touches the disc with a stick or the like, or the disc cracks even slightly, the disc may burst due to a revolution force of the disc that is rotating at the high speed and pieces of the burst disc may scatter at a very high speed. The pieces of the burst disc may come out of the body 11, and thus, may cause fatal injury.

US 2004/0004785 discloses a front panel assembly of disk drive having door locking means and a disk drive incorporating the same.

It is an object of the present invention to address the above-mentioned problems by providing a door-safety apparatus that prevents a door from being forcibly opened when a disc tray is in a disc loading position and a disc player having such door-safety apparatus.

According to an aspect of the present invention, there is provided a door-safety apparatus of a disc player including a front panel including an opening, a door pivotably installed at the front panel and adapted to pivot between an opened position in which the opening is to be opened and a closed position in which the opening is to be closed, a rising and falling guide for ascending and descending of a pickup base on which a turntable for receiving a disc thereon is installed, and a door-forcibly-opening preventing unit installed between the door and the rising and falling guide and selectively limiting the pivoting of the door according to a position of the rising and falling guide.

The door-forcibly-opening preventing unit may include a first protrusion installed on an inner surface of the door, a second protrusion installed at the rising and falling guide that is adapted to depend on a position of the rising and falling guide moving between an intercept position, in which the first protrusion is intercepted from moving with the door, and a release position, in which the first protrusion is allowed to move. The second protrusion may be in the intercept position so as to limit the pivoting of the door when the rising and falling guide rises the pickup base to be in a disc placing position so as to place a disc on the turntable, and may be in the release position so as to allow the pivoting of the door when the rising and falling guide gets out of the disc placing position.

The first protrusion may include a protrusion piece protruding on the inner surface of the door inside the front panel and including at least one plane, and the second protrusion may include a protrusion bar extending toward the door and including a plane facing the plane of the protrusion piece when the second protrusion is in the intercept position.

The protrusion bar may include a movement guide for guiding a movement of the protrusion bar between the intercept position and the release position. The movement guide may include a guide groove formed in the vicinity of the plane of the protrusion bar so as to be guided along a wall of a main base on which the pickup base is installed.

The door-forcibly-opening preventing unit may further include a stopper limiting a movement position of the rising and falling guide. The stopper may include a recess part formed at the wall of the main base on which the pickup base is installed so as to guide the second protrusion.

According to another aspect of the present invention, there is provided a disc player including a front panel assembly including a front panel including an opening, a door pivotably installed at the front panel and adapted to pivot between an opened position in which the opening is to be opened and a closed position in which the opening is to be closed, and an elastic member for applying an elastic force to the door toward a direction along which the door pivots toward the closed position, a body including a disc tray for mounting a disc thereon and to be removed from or inserted into the front panel through the opening, and a rising and falling guide for ascending and descending a pickup base on which a turntable for receiving the disc thereon is installed, and a door-safety apparatus including a door-forcibly-opening preventing unit installed between the door and the rising and falling guide and adapted for selectively limiting pivoting of the door according to a position of the rising and falling guide.

The door-forcibly-opening preventing unit may include a first protrusion installed on an inner surface of the door, and a second protrusion installed at the rising and falling guide, and according to the position of the rising and falling guide, adapted for moving between an intercept position in which the first protrusion is intercepted from moving with the door and a release position in which the first protrusion is allowed to move. The second protrusion may be in the intercept position so as to limit the pivoting of the door when the rising and falling guide raises the pickup base to be in a disc placing position so as to place a disc on the turntable, and it may be in the release position so as to allow the pivoting of the door when the rising and falling guide gets out of the disc placing position.

The first protrusion may include a protrusion piece protruding on the inner surface of the door inside the front panel and including at least one plane, and the second protrusion may include a protrusion bar extending toward the door and including a plane facing the plane of the protrusion piece when the second protrusion is in the intercept position.

The protrusion bar may include a movement guide for guiding a movement of the protrusion bar between the intercept position and the release position. The movement guide may include a guide groove formed in the vicinity of the plane of the protrusion bar so as to be guided along a wall of a main base on which the pickup base is installed.

The door-forcibly-opening preventing unit may further include a stopper for limiting a movement position of the rising and falling guide. The stopper may include a recess part formed at the wall of the main base on which the pickup base is installed so as to guide the second protrusion.

According to another aspect of the present invention there is provided a door-safety method of a disc player including designing a front panel to include an opening, installing a door pivotably at the front panel, ascending and descending a pickup base on which a turntable placing a disc thereon is installed, and preventing the door from forcibly opening by selectively limiting pivoting of the door according to a position of a rising and falling guide.

Additional aspects and/or advantages of the invention will be set forth in part in the description which follows and, in part, will be apparent from the description, or may be learned by practice of the invention.

For a better understanding of the invention, and to show how embodiments of the same may be carried into effect, reference will now be made, by way of example, to the accompanying diagrammatic drawings in which:
FIG. 1 is an exploded perspective view illustrating a conventional disc player;
FIG. 2 is a cross-sectional view illustrating the conventional disc player, taken along line A-A' shown in FIG. 1;
FIG. 3 is an exploded perspective view illustrating a disc player including a door-safety apparatus according to an embodiment of the present invention;
FIG. 4A is a partial perspective view of the disc player illustrated in FIG. 3 when a disc tray is in a disc loading position;
FIG. 4B is a partial perspective view of the disc player illustrated in FIG. 4A when the disc tray is removed;
FIG. 5A is a partial perspective view of the disc player illustrated in FIG. 3 when the disc tray is in a disc unloading position;
FIG. 5B is a partial perspective view of the disc player illustrated in FIG. 5A when the disc tray is removed;
FIGS. 6A and 6B are partial perspective views illustrating the operation of a door-safety apparatus of the disc player illustrated in FIG. 3; and
FIG. 7 is a front view of a rising and falling guide of the disc player illustrated in FIG. 3.

Reference will now be made in detail to the embodiments of the present invention, examples of which are illustrated in the accompanying drawings, wherein like reference numerals refer to the like elements throughout. The embodiments are described below to explain the present invention by referring to the figures.

A door-safety apparatus and a disc player including the door-safety apparatus according to the present invention will be described in detail with reference to the attached drawings .

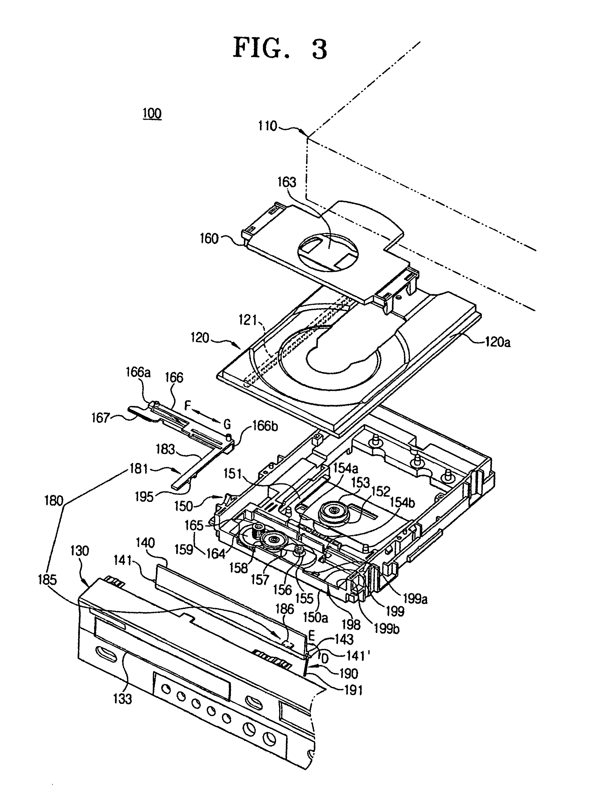

FIG. 3 is an exploded perspective view of a disc player 100 including a door-safety apparatus according to an embodiment of the present invention.

The disc player 100 includes a front panel 130, a main base 150, a pickup base 151, a disc tray 120, a disc clamping unit 160, a door-safety apparatus 180, and an outer case 110. The main base 150, the pickup base 151, the disc tray 120, the disc clamping unit 160, and the outer case 110 constitute a body of the disc player 100. The front panel 130 includes an opening 133 that is opened and closed by a door 140. The door 140 is supported by a support bracket (not shown) formed in the vicinity of the opening 133 so as to pivot left and right hinge arms 141 and 141' formed at both lower ends of the door 140.

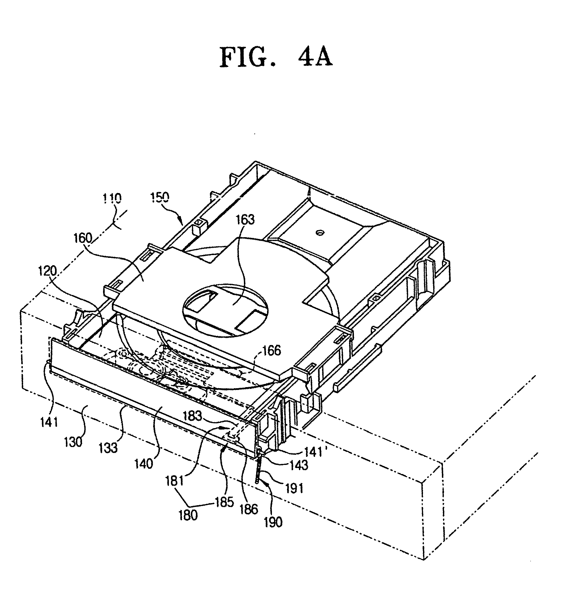

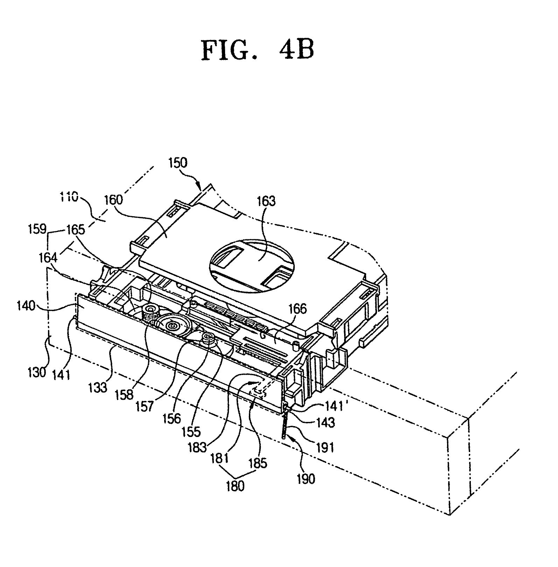

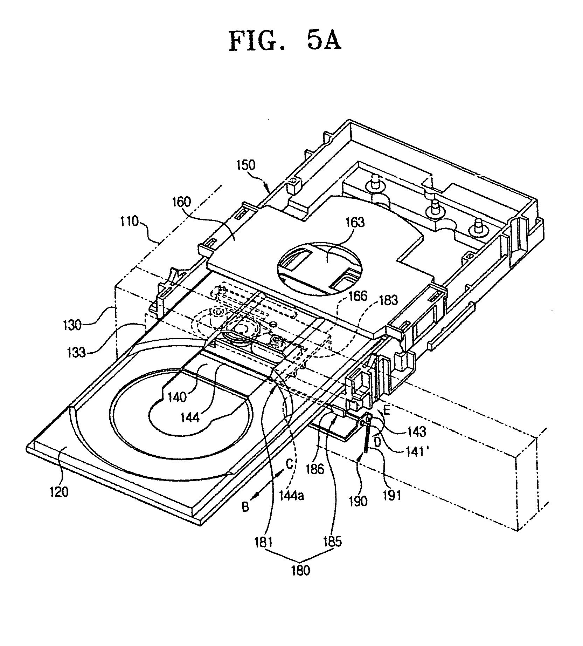

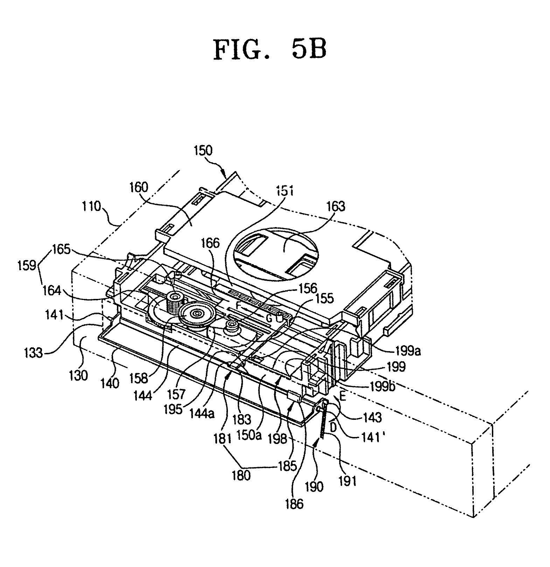

When the disc tray 120 moves, the door 140 pivots between an opened position (shown in FIGS. 5A and 5B) in which the opening 133 is opened by the disc tray 120 and a closed position (shown in FIGS. 4A and 4B) in which the opening 133 is closed.

A stationary bracket 143 is formed under the right hinge arm 141' of the door 140. An elastic member 190 is fixed to the stationary bracket 143 and applies an elastic force to the door 140 in the direction D (shown in FIGS. 3, 5A, and 5B) along which the door 140 is to be closed.

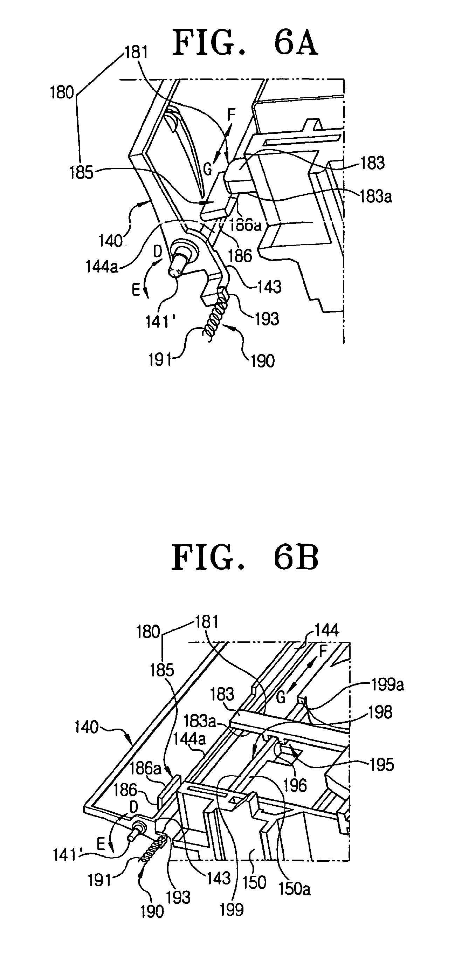

As shown in FIG. 6A, the elastic member 190 includes a tension spring 191 including an end fixed to a first hanger 193 formed on a lower end of the bracket 140 and the other end supported by a second hanger (not shown) formed on an inner surface of the front panel 130. The front panel 130 and the door 140 constitute a front panel assembly combined with the body. A loading motor 155 is installed on a front end of the main base 150 to provide a power for moving the disc tray 120, and power for ascending and descending the pickup base 151. The power of the loading motor 155 is transmitted from a motor pulley 156 installed on an output shaft to a gear pulley 158 via a belt 157. A first gear (not shown) formed under the gear pulley 158 gears with a second gear 164 of a loading gear 159 to transmit the power of the loading motor 155 to the loading gear 159.

The power of the loading motor 155 transmitted to the loading gear 159 is transmitted through a pinion gear 165 of the loading gear 159 to a first rack gear 123 formed on a lower surface of the disc tray 120. Thus, the disc tray 120 can move between a disc unloading position (shown in FIG. 5A) in which the disc tray 120 is to be removed from the front panel 130 through the opening 133 and a disc loading position (shown in FIG. 4A) in which the disc tray 120 is inserted into the front panel 130 through the opening 133.

The power of the loading motor 155 transmitted to the loading gear 159 is transmitted through the pinion gear 165 of the loading gear 159 to a second rack gear 167 formed at a first end 166a of a rising and falling guide 166. Thus, the rising and falling guide 166 is moved by the loading motor 155 in a second movement direction F or G (shown in FIGS, 3, 4B, 5B, and 7) orthogonal to first movement directions B and C (shown in FIG. 5A) along which the disc tray 120 moves.

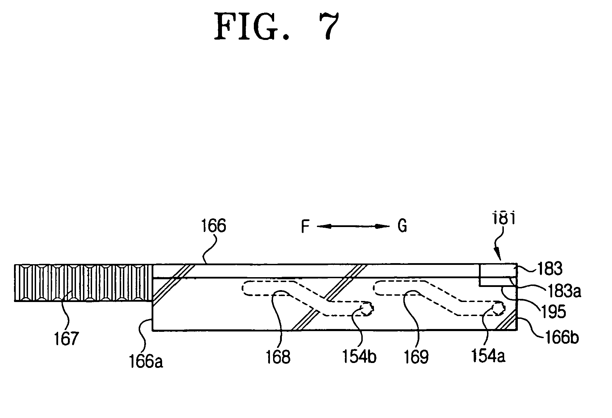

As shown in FIG. 7, the cam grooves 168 and 169 are formed at the rising and falling guide 166. Guide bosses 154a and 154b of the pickup base 151 that will be described later are inserted into and guided by the cam grooves 168 and 169.

The pickup base 151 is installed on the main base 150. The pickup base 151 operates so that a front end thereof ascends and descends at a predetermined angle by a support shaft (not shown) rotatably supported by both of the back sides of the main base 150. The guide bosses 154a and 154b guided by the cam grooves 168 and 169 of the rising and falling guide 166 are formed at the front end of the pickup base 151.

A spindle motor 152 is installed on the pickup base 151. A turntable 153 on which a disc is to be placed is installed at an output shaft of the spindle motor 152. A disc clamping unit 160 is fixed to the main base 150 above the turntable 153 and clamps the disc placed on the turntable 153. A clamp 163 is installed in the center of the disc clamping unit 160. The structure of the clamp 163 is generally known and thus will not be described in detail herein.

The door-safety apparatus 180 selectively limits the pivoting of the door 140 according to the position of the rising and falling guide 160 moving in the second movement direction F or G with the movement of the disc tray 120. In other words, when the rising and falling guide 166 raises the pickup base 151 to be in a disc placing position (refer to FIGS. 4A, 4B, and 6A) in which the disc is to be placed on the turntable 153, the door-safety apparatus 180 limits the pivoting of the door 140. When the rising and falling guide 166 is in a position other than the disc placing position, the door-safety apparatus 180 allows the pivoting of the door 140.

For this purpose, the door-safety apparatus 180 includes a first protrusion 185 installed on an inner surface of the door 140 and a second protrusion 181 installed at a second end 166b of the rising and falling guide 166.

The first protrusion 185 includes a protrusion piece 186 protruding under the inner surface of the door 140 adjacent to the right hinge arm 141' inside the front panel 130. As shown in FIG. 6A, the protrusion piece 186 includes an upper surface 186a formed in the form of a flat plane.

The second protrusion 181 includes a protrusion bar 183 extending from the second end 166b of the rising and falling guide 166 toward the door 140, i.e., in the first movement direction B along which the disc tray 120 moves. A front end of the protrusion bar 183 includes a lower surface 183a formed in the form of a flat plane and facing the upper surface 186a of the protrusion piece 186. As shown in FIGS. 4A, 4B, and 6A, when the door 140 is closed, the protrusion bar 183 partially overlaps with the protrusion piece 186 formed on the inner surface of the door 140, but the protrusion bar 183 does not contact the protrusion piece 186 so as not to obstruct the movement of the rising and falling guide 166.

The protrusion bar 183 moves between an intercept position (as shown in FIGS. 4A, 4B, and 6A) and a release position according to the position of the rising and falling guide 166, i.e., with the movement of the rising and falling guide 166. In the intercept position, the lower surface 183a of the front end of the protrusion bar 183 faces the upper surface 186a of the protrusion piece 186, and thus, the protrusion piece 186 is intercepted from pivoting with the door 140 to limit the pivoting of the door 140 when the door 140 pivots in direction E (shown in FIGS. 3, 5A, and 5B) along which the door 140 is to be opened. In the release position, as shown in FIGS. 5A, 5B, and 6B, the lower surface 183a of the front end of the protrusion bar 183 does not face the upper surface 186a of the protrusion piece 186. Therefore, when the door 150 pivots in the direction E, the protrusion piece 186 is allowed to pivot with the door 140 so that the door 140 freely pivots.

In other words, when the disc tray 120 is in the disc loading position as shown in FIG. 4A, i.e., the rising and falling guide 166 is in the disc placing position, the protrusion bar 183 is in the intercept position (as shown in FIGS. 4B and 6A). When the disc tray 120 is in a position other than the disc loading position, i.e., the rising and falling guide 166 is in a position other than the disc placing position, the protrusion bar 183 is in the release position.

The protrusion bar 183 further includes a movement guide 195 guiding the movement of the protrusion bar 183 between the intercept and release positions. As shown in FIG. 6B, the movement guide 195 includes a guide groove 196 protruding in a U-shape fashion in the vicinity of the lower surface 183a of the front end of the protrusion bar 183 so as to be guided along a recess part 199 of a stopper 198 that is formed on a front wall 150a of the main base 150 and will be described later.

In FIG. 6B, an incised part 144a is formed at a reinforcement rib 144 formed at a lower edge of the inner surface of the door 140 and incised by a distance to which the protrusion bar 183 moves within the release position. Thus, when the protrusion bar 183 is in the release position and the door 140 is opened, the incised part 144a intercepts the protrusion bar 183 from contacting the reinforcement rib 144 so as to open the door 140.

In addition, as shown in FIG. 6A, when the protrusion bar 183 is in the intercept position due to the rising and falling guide 166 being in the disc placing position and pivoting in the direction E along which the door 140 is to be opens, the protrusion bar 183 faces and gears with the protrusion piece 186 formed at the door 140 so as to intercept the movement of the protrusion piece 186. This limits the pivoting of the door 140. As a result, the door 140 is prevented from opening.

In FIG. 6B, the protrusion bar 183 is in the release position due to the rising and falling guide 166 which moves from the disc placing position toward the second movement direction F and pivots toward the direction E along which the door 140 opens. The protrusion bar 183 does not face and gear with the protrusion piece 186 to allow the movement of the protrusion piece 186 so that the door 140 freely pivots. As a result, the door 140 opens.

The door-safety apparatus 180 of the present invention further includes the stopper 198 limiting the movement of the protrusion bar 183 of the second protrusion 181, i.e., the movement of the rising and falling guide 166. The stopper 198 is formed on the front wall 150a of the main base 150 to gear with the guide groove 196 of the protrusion bar 183 so as to guide the guide groove 196. The stopper also includes the recess part 199 including first and second movement preventing curbs 199a and 199b. When the disc tray 120 is in the disc loading position as shown in FIG. 4A ,and the disc unloading position as shown in FIG. 5A, the first and second movement preventing curbs 199a and 199b intercept the protrusion bar 183 from moving so as to intercept the rising and falling guide 166 from moving toward the second movement direction F or G.

The operation of the disc player 100 including the door-safety apparatus 180 of the present invention having the above-described structure will now be described in detail with reference to FIGS. 3 through 7.

The operation in which the disc tray 120 in the disc unloading position as shown in FIG. 5A loads a disc thereon and then is inserted in the disc loading position, will be described.

As a tray opening and closing button (not shown) is pressed, a controller rotates the loading motor 155 in one direction, for example, counterclockwise, to load the disc tray 120. In a case where the disc tray 120 is forcibly pushed into the disc loading position, the controller senses by using a sensor that the disc tray 120 has been moved, and then, rotates the loading motor 155 counterclockwise.

As the loading motor 155 rotates, the disc tray 120 moves in the first movement direction c due to the power of the loading motor 155 transmitted through the motor pulley 156, the belt 157, the gear pulley 158, the pinion gear 165 of the loading gear 159, and the first rack gear 123. The rising and falling guide 166 moves in the second movement direction G due to the power of the loading motor 155 transmitted through the second rack gear 167 gearing with the pinion gear 165. When a front end of the disc tray 120 passes through the opening 133 of the front panel 130 due to the movement of the disc tray 120, the door 140 pivots in the direction D along which the door 140 is to be closed due to a tension of the tension spring 191, and thus, is closed.

When the disc tray 120 is in the disc loading position, the pickup base 151, which has descended relatively down so as not to interfere with the movement of the disc tray 120, ascends.

In other words, as shown in FIG. 7, the guide bosses 154 and 154b of the pickup base 151 receive the power of the loading motor 155, and thus, are guided along the cam grooves 168 and 169 due to the movement of the rising and falling guide 166 in the second movement direction G. As a result, when the disc tray 120 is completely inserted into the front panel 130 through the opening 133, the pickup base 151 starts ascending.

The disc placed on the disc tray 120 is placed on the turntable 153 due to the ascent of the pickup base 151. When the turntable 153 goes further up due to the continuous ascent of the pickup base 151, the clamp 163 clamps the disc placed on the turntable 153.

Thereafter, when the disc tray 120 completely reaches the disc loading position as shown in FIG. 4A, the controller stops the loading motor 155, and the loading operation of the disc tray 120 is completed.

When the rising and falling guide 166 moves in the second movement direction G, and thus, is in the disc placing position, the protrusion bar 183 is preventing from moving by being intercepted by the second movement preventing curb 199b of the recess part 199 so as to stop the movement of the rising and falling guide 166. Also, as shown in FIG. 6A, the lower surface 183a of the front end of the protrusion bar 183 faces the upper surface 186a of the protrusion piece 186, and thus, is in the intercept position.

Therefore, although a child or a user pulls the door 140 in the direction E by a trick or through carelessness, the upper surface 186a of the protrusion piece 186 gears with the lower surface 183a of the front end of the protrusion bar 183. Thus, the door 140 does not pivot. As a result, the door 140 is not opened.

As described above, in the disc player 100 of the present invention, although a child or a user desires to open the door 140 by accident when the disc tray 120 is in the disc loading position, the door 140 is not opened. As a result, the child or the user can be protected from a safety-related accident occurring due to the high speed rotation of a disc caused by the opening of the door 140 during the operation of the disc player 100.

The operation of moving the disc tray 120 from the disc loading position to the disc unloading position as shown in FIG. 4A will now be described.

When the tray opening and closing button is pressed, the controller rotates the loading motor 155 in another direction, for example, clockwise, to remove the disc tray 120.

When the loading motor 155 rotates, the rising and falling guide 166 moves in the second movement direction F due to the power of the loading motor 155 that is transmitted through the motor pulley 156, the belt 157, the gear pulley 158, the pinion gear 165 of the loading gear 159, and the second rack gear 167.

As a result, the guide bosses 154a and 154b of the pickup base 151 are guided along the cam grooves 168 and 169 due to the rising and falling guide 166 that receives the power of the loading motor 155 in an ascent position, and thus, moves in the second movement direction F. Thus, as the guide bosses 154a and 154b are guided along the cam grooves 168 and 169, the pickup base 151 starts descending. The clamp 163 is separated from the turntable 153 due to the descent of the pickup base 151 to release the disc. When the turntable 153 moves further down due to the continuous descent of the pickup base 151, the disc placed on the turntable 153 is placed on the disc tray 120.

The protrusion bar 183 formed at the second end 166b of the rising and falling guide 166 moves from the intercept position, in which the lower surface 183a of the front end of the protrusion bar 183 faces the upper surface 186a of the protrusion piece 186 formed at the door 140, towards the second movement direction F due to the movement of the rising and falling guide 166.

When the pickup base 151 completely descends so as not to interfere with the movement of the disc tray 120, the disc tray 120 moves towards the first movement direction B due to the power of the loading motor 155 that is transmitted through the motor pulley 156, the belt 157, the gear pulley 158, the pinion gear 165 of the loading gear 159, and the first rack gear 123.

When the front end of the disc tray 120 contacts the door 140 due to the movement of the disc tray 120, the protrusion bar 183 is the release position in which the lower surface 183a of the front end of the protrusion bar 183 does not face the upper surface 186a of the protrusion piece 186 formed at the door 140.

Thus, when the front end of the disc tray 120 further moves to push the door 140, the door 140 pivots towards the direction E. As a result, the door 140 is opened as shown in FIG. 6B.

As shown in FIGS. 5A and 5B, when the disc tray 120 completely reaches the disc unloading position, the protrusion bar 183 is prevented from moving by being intercepted by the first movement preventing curb 199a of the recess part 199 that stops the movement of the rising and falling guide 166, while the controller stops the loading motor 155.

As described above, in a door-safety apparatus and a disc player including the door-safety apparatus according to the present invention, when a disc tray is in a disc loading position, a door can be prevented from being forcibly opened. Thus, when a child or a user accidentally opens the door during the operation of the disc player, a safety-related accident that may occur due to a disc rotating at a high speed can be prevented.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

The invention is not restricted to the details of the foregoing embodiment(s).

## Claims

1. A door-safety apparatus of a disc player comprising:
a front panel (130) comprising an opening (133);
a door (140) pivotally installed at the front panel (130) adapted to pivot between an opened position in which the opening (133) is to be opened and a closed position in which the opening (133) is to be closed;
**characterized in that** the apparatus further comprises a rising and falling guide (166) for ascending and descending a pickup base (151) on which a turntable (153) for receiving a disc thereon is installed; and
a door-forcibly-opening preventing unit (180) installed between the door (140) and the rising and falling guide (166) and adapted for selectively limiting pivoting of the door (140) according to a position of the rising and falling guide (166).

2. The door-safety apparatus of claim 1, wherein the door forcibly opening preventing unit (180) comprises:
a first protrusion (185) installed on an inner surface of the door (140); and
a second protrusion (181) installed at the rising and falling guide (166) and moving according to the position of the rising and falling between an intercept position in which the first protrusion (185) is intercepted from moving with the door (140), and a release position in which the first protrusion (185) is allowed to move.

3. The door-safety apparatus of claim 2, wherein the second protrusion (181) is in the intercept position to limit the pivoting of the door (140) when the rising and falling guide (166) raises the pickup base (151) to be in a disc placing position for placing a disc on the turntable (153), and is in the release position to allow the pivoting of the door (140) when the rising and falling guide (166) gets out of the disc placing position.

4. The door-safety apparatus of claim 3, wherein:
the first protrusion (185) comprises a protrusion piece (186) protruding on the inner surface of the door (140) inside the front panel (130) and comprising at least one plane, and
the second protrusion (181) comprises a protrusion bar (183) extending toward the door (140) and comprising a plane facing the plane of the protrusion piece (186) when the second protrusion (181) is in the intercept position.

5. The door-safety apparatus of claim 4, wherein the protrusion bar (183) comprises a movement guide (195) for guiding a movement of the protrusion bar (183) between the intercept position and the release position.

6. The door-safety apparatus of claim 5, wherein the movement guide (195) comprises a guide groove (196) formed in the vicinity of the plane of the protrusion bar (183) so as to be guided along a wall (150a) of a main base (150) on which the pickup base (151) is installed.

7. The door-safety apparatus of any one of claims 2 to 6, wherein the door forcibly opening preventing unit (180) further comprises a stopper (198) for limiting a movement position of the rising and falling guide (166).

8. The door-safety apparatus of claim 7, wherein the stopper (198) comprises a recess part (199) formed at the wall (150a) of the main base (150) on which the pickup base (151) is installed so as to guide the second protrusion (181).

9. A disc player comprising:
a front panel (130) assembly comprising a front panel (130) comprising an opening (133), a door (140) pivotably installed at the front panel (130) adapted to pivot between an opened position in which the opening (133) is to be opened and a closed position in which the opening (133) is to be closed, and an elastic member for applying an elastic force to the door (140) toward a direction along which the door (140) pivots toward the closed position;
a body comprising a disc tray for mounting a disc thereon and adapted to be removed from or inserted into the front panel (130) through the opening (133), and a rising and falling guide (166) adapted for rising and falling a pickup base (151) on which a turntable (153) for receiving the disc thereon is installed; and
a door-safety apparatus comprising a door-forcibly-opening preventing unit (180) installed between the door (140) and the rising and falling guide (166) and for selectively limiting pivoting of the door (140) according to a position of the rising and falling guide (166).

10. The disc player of claim 9, wherein the door (140) forcibly opening preventing unit comprises:
a first protrusion (185) installed on an inner surface of the door (140); and
a second protrusion (181) installed at the rising and falling guide (166) and moving according to the position of the rising and falling guide (166) between an intercept position in which the first protrusion (185) is intercepted from moving with the door (140), and a release position in which the first protrusion (185) is allowed to move.

11. The disc player of claim 10, wherein the second protrusion (181) is in the intercept position to limit the pivoting of the door (140) when the rising and falling guide (166) raises the pickup base (151) to be in a disc placing position to place a disc on the turntable (153), and is in the release position to allow the pivoting of the door (140) when the rising and falling guide (166) gets out of the disc placing position.

12. The disc player of claim 11, wherein:
the first protrusion (185) comprises a protrusion piece (186) protruding on the inner surface of the door (140) inside the front panel (130) and comprising at least one plane, and
the second protrusion (181) comprises a protrusion bar (183) extending toward the door (140) and comprising a plane facing the plane of the protrusion piece (186) when the second protrusion (181) is in the intercept position.

13. The disc player of claim 12, wherein the protrusion bar (183) comprises a movement guide (195) for guiding a movement of the protrusion bar (183) between the intercept position and the release position.

14. The disc player of claim 13, wherein the movement guide (195) comprises a guide groove (196) formed in the vicinity of the plane of the protrusion bar (183) so as to be guided along a wall (150a) of a main base (150) on which the pickup base (151) is installed.

15. The disc player of any one of claims 10 to 14, wherein the door forcibly opening preventing unit (180) further comprises a stopper (198) for limiting a movement position of the rising and falling guide (166).

16. The disc player of claim 15, wherein the stopper (198) comprises a recess part (199) formed at the wall (150a) of the main base (150) on which the pickup base (151) is installed so as to guide the second protrusion (181).

17. A door-safety method of a disc player comprising:
including an opening (133) in a front panel (130);
installing a door (140) pivotally at the front panel (130);
ascending and descending a pickup base (151) on which a turntable (153) placing a disc thereon is installed; and
preventing the door (140) from forcibly opening by selectively limiting pivoting of the door (140) according to a position of a rising and falling guide (166).

## Patentansprüche

1. Türsicherheitsvorrichtung für einen CD-Spieler, umfassend:
eine Frontplatte (130), die eine Öffnung (133) umfasst;
eine Tür (145), die drehgelenkig an der Frontplatte (130) installiert und dazu eingerichtet ist, sich zwischen einer geöffneten Position, in der die Öffnung (133) geöffnet werden soll und einer geschlossen Position, in der die Öffnung (133) geschlossen werden soll, zu drehen;
**dadurch gekennzeichnet, dass** die Vorrichtung weiterhin eine Hebe- und Senkführung (166) zum Anheben und Absenken einer Aufnahmebasis (151), auf der ein Plattenteller (153) zum Aufnehmen einer CD installiert ist, umfasst; und
eine Einheit zum Verhindern des gewaltsamen Öffnens der Tür (180), die zwischen der Tür (140) und der Hebe- und Senkführung (166) installiert und dazu eingerichtet ist, das Drehen der Tür (140) entsprechend einer Position der Hebe- und Senkführung (166) selektiv zu beschränken.

2. Türsicherheitsvorrichtung nach Anspruch 1, wobei die Einheit zum Verhindern des gewaltsamen Öffnens der Tür (180) umfasst:
einen ersten Vorsprung (185), der an einer inneren Oberfläche der Tür (140) installiert ist; und
einen zweiten Vorsprung (181), der an der Hebe- und Senkführung (166) installiert ist und sich entsprechend der Position der Hebe- und Senkführung zwischen einer Abfangposition, in welcher der erste Vorsprung (185) abgefangen wird, um sich nicht mit der Tür (140) zu bewegen, und einer Löseposition bewegt, in der sich der erste Vorsprung (185) bewegen darf.

3. Türsicherheitsvorrichtung nach Anspruch 2, wobei sich der zweite Vorsprung (181) in der Abfangposition befindet, um das Drehen der Tür (140) zu beschränken, wenn die Hebe- und Senkführung (166) die Aufnahmebasis (151) auf eine CD-Platzierungsposition zum Platzieren einer CD auf dem Plattenteller (153) hebt, und sich in der Löseposition befindet, um ein Drehen der Tür (140) zu ermöglichen, wenn sich die Hebe- und Senkführung (166) aus der CD-Platzierungsposition bewegt.

4. Türsicherheitsvorrichtung nach Anspruch 3, wobei:
der erste Vorsprung (185) ein Vorsprungsstück (186) umfasst, das an der inneren Oberfläche der Tür (140) an der Innenseite der Frontplatte (130) vorsteht und zumindest eine Ebene umfasst; und
der zweite Vorsprung (181) einen Vorsprungsbalken (183) umfasst, der sich in Richtung der Tür (140) erstreckt und eine Ebene umfasst, die der Ebene des Vorsprungsstücks (186) gegenüber liegt, wenn sich der zweite Vorsprung (181) in der Abfangposition befindet.

5. Türsicherheitsvorrichtung nach Anspruch 4, wobei der Vorsprungsbalken (183) eine Bewegungsführung (195) zum Führen einer Bewegung des Vorsprungsbalkens (183) zwischen der Abfangposition und der Löseposition umfasst.

6. Türsicherheitsvorrichtung nach Anspruch 5, wobei die Bewegungsführung (195) eine Führungsrille (196) umfasst, die in der Nähe der Ebene des Vorsprungsbalkens (183) ausgebildet ist, um entlang einer Wand (150a) einer Hauptbasis (150) zu führen, an der die Aufnahmebasis (151) installiert ist.

7. Türsicherheitsvorrichtung nach einem der Ansprüche 2 bis 6, wobei die Einheit zum Verhindern des gewaltsamen Öffnens der Tür (180) weiterhin eine Absperrvorrichtung (198) zum Beschränken einer Bewegungsposition der Hebe- und Senkführung (166) umfasst.

8. Türsicherheitsvorrichtung nach Anspruch 7, wobei die Absperrvorrichtung (198) einen Ausnehmungsteil (199) umfasst, der an der Wand (150a) der Hauptbasis (150) ausgebildet ist, an der die Aufnahmebasis (151) installiert ist, um den zweiten Vorsprung (181) zu führen.

9. CD-Spieler, umfassend:
eine Frontplattenanordnung (130), umfassend eine Frontplatte (130), die eine Öffnung (133) umfasst, eine Tür (140), die drehgelenkig an der Frontplatte (130) installiert und dazu eingerichtet ist, sich zwischen einer geöffneten Position, in der die Öffnung (133) geöffnet werden soll und einer geschlossenen Position, in der die Öffnung (133) geschlossen werden soll, zu drehen, und ein elastisches Element zum Anwenden einer Spannkraft auf die Tür (140) in einer Richtung, in der sich die Tür (140) in Richtung der geschlossenen Position dreht;
einen Körper, umfassend eine CD-Schublade zum Festsetzen einer CD darauf und dazu eingerichtet, durch die Öffnung (133) aus der Frontplatte (130) entfernt oder durch diese hineingeschoben zu werden, und eine Hebe- und Senkführung (166), die dazu eingerichtet ist, eine Aufnahmebasis (151) zu heben und zu senken, auf der ein Plattenteller (153) zum Aufnehmen der CD installiert ist; und
eine Türsicherheitsvorrichtung umfassend eine Einheit zum Verhindern des gewaltsamen Öffnens der Tür (180), die zwischen der Tür (140) und der Hebe- und Senkführung (166) installiert und dazu eingerichtet ist, das Drehen der Tür (140) entsprechend einer Position der Hebe- und Senkführung (166) selektiv zu beschränken.

10. CD-Spieler nach Anspruch 9, wobei die Einheit zum Verhindern des gewaltsamen Öffnens der Tür (180) umfasst:
einen ersten Vorsprung (185), der an einer inneren Oberfläche der Tür (140) installiert ist; und
einen zweiten Vorsprung (181), der an der Hebe- und Senkführung (166) installiert ist und sich entsprechend der Position der Hebe- und Senkführung (166) zwischen einer Abfangposition, in welcher der erste Vorsprung (185) abgefangen wird, um sich nicht mit der Tür (140) zu bewegen, und einer Löseposition bewegt, in der sich der erste Vorsprung (185) bewegen darf.

11. CD-Spieler nach Anspruch 10, wobei sich der zweite Vorsprung (181) in der Abfangposition befindet, um das Drehen der Tür (140) zu beschränken, wenn die Hebe- und Senkführung (166) die Aufnahmebasis (151) auf eine CD-Platzierungsposition zum Platzieren einer CD auf dem Plattenteller (153) hebt, und sich in der Löseposition befindet, um ein Drehen der Tür (140) zu ermöglichen, wenn sich die Hebe- und Senkführung (166) aus der CD-Platzierungsposition bewegt.

12. CD-Spieler nach Anspruch 11, wobei:
der erste Vorsprung (185) ein Vorsprungsstück (186) umfasst, das an der inneren Oberfläche der Tür (140) an der Innenseite der Frontplatte (130) vorsteht und zumindest eine Ebene umfasst; und
der zweite Vorsprung (181) einen Vorsprungsbalken (183) umfasst, der sich in Richtung der Tür (140) erstreckt und eine Ebene umfasst, die der Ebene des Vorsprungsstücks (186) gegenüberliegt, wenn sich der zweite Vorsprung (181) in der Abfangposition befindet.

13. CD-Spieler nach Anspruch 12, wobei der Vorsprungsbalken (183) eine Bewegungsführung (195) zum Führen einer Bewegung des Vorsprungsbalkens (183) zwischen der Abfangposition und der Löseposition umfasst.

14. CD-Spieler nach Anspruch 13, wobei die Bewegungsführung (195) eine Führungsrille (196) umfasst, die in der Nähe der Ebene des Vorsprungsbalkens (183) ausgebildet ist, um entlang einer Wand (150a) einer Hauptbasis (150) zu führen, an der die Aufnahmebasis (151) installiert ist.

15. CD-Spieler nach einem der Ansprüche 10 bis 14, wobei die Einheit zum Verhindern des gewaltsamen Öffnens der Tür (180) weiterhin eine Absperrvorrichtung (198) zum Beschränken einer Bewegungsposition der Hebe- und Senkführung (166) umfasst.

16. CD-Spieler nach Anspruch 15, wobei die Absperrvorrichtung (198) einen Ausnehmungsteil (199) umfasst, der an der Wand (150a) der Hauptbasis (150) ausgebildet ist, an der die Aufnahmebasis (151) installiert ist, um den zweiten Vorsprung (181) zu führen.

17. Türsicherheitsverfahren für einen CD-Spieler, umfassend:
Einschließen einer Öffnung (133) in einer Frontplatte (130);
Installieren einer Tür (140) drehgelenkig an der Frontplatte (130);
Anheben und Absenken einer Aufnahmeplatte (151), auf der ein Plattenteller (153) zum Platzieren einer CD installiert ist; und
Verhindern, dass die Tür (140) gewaltsam geöffnet wird, indem das Drehen der Tür (140) entsprechend einer Position der Hebe- und Senkführung (166) selektiv beschränkt wird.

## Revendications

1. Appareil de sécurisation de porte pour un lecteur de disque, comprenant :
un panneau frontal (130) comprenant une ouverture (133) ;
une porte (140) installée à pivotement sur le panneau frontal (130), conçue pour pivoter entre une position d'ouverture, dans laquelle l'ouverture (133) doit être ouverte, et une position de fermeture, dans laquelle l'ouverture (133) doit être fermée ;
**caractérisé en ce que** l'appareil comprend en outre un guide montant et descendant (166) pour faire monter et descendre une base réceptrice (151) sur laquelle est agencé un plateau tournant (153) pour y recevoir un disque ; et
une unité (180) pour empêcher l'ouverture forcée de la porte, qui est agencée entre la porte (140) et le guide montant et descendant (166) et est conçue pour limiter de manière sélective le pivotement de la porte (140) en fonction d'une position du guide montant et descendant (166).

2. Appareil de sécurisation de porte selon la revendication 1, dans lequel l'unité (180) destiné à empêcher l'ouverture forcée de la porte comprend :
une première saillie (185) agencée sur une surface interne de la porte (140) ; et
une seconde saillie (181) agencée sur le guide montant et descendant (166) et se déplaçant en fonction de la position du guide montant et descendant entre une position d'interception, dans laquelle la première saillie (185) est interceptée de manière à l'empêcher de se déplacer avec la porte (140), et une position de libération, dans laquelle le déplacement de la première saillie (185) est autorisé.

3. Appareil de sécurisation de porte selon la revendication 2, dans lequel la seconde saillie (181) est en position d'interception pour limiter le pivotement de la porte (140) lorsque le guide montant et descendant (166) élève la base réceptrice (151) jusqu'à ce qu'elle soit en position de placement de disque pour placer un disque sur le plateau tournant (153) et est en position de libération pour permettre à la porte (140) de pivoter lorsque le guide montant et descendant (166) quitte la position de placement de disque.

4. Appareil de sécurisation de porte selon la revendication 3, dans lequel :
la première saillie (185) comprend une pièce saillante (186) dépassant de la surface interne de la porte (140) à l'intérieur du panneau frontal (130) et comprenant au moins un plan, et
la seconde saillie (181) comprend une barre saillante (183) s'étendant vers la porte (140) et comprenant un plan en regard du plan de la pièce saillante (186) lorsque la seconde saillie (181) est en position d'interception.

5. Appareil de sécurité de porte selon la revendication 4, dans lequel la barre saillante (183) comprend un guide de mouvement (195) pour guider un mouvement de la barre saillante (183) entre la position d'interception et la position de libération.

6. Appareil de sécurisation de porte selon la revendication 5, dans lequel le guide de mouvement (195) comprend une rainure de guidage (196) ménagée à proximité du plan de la barre saillante (183) de manière à être guidée le long d'une paroi (150a) d'une base principale (150), sur laquelle est agencée la base réceptrice (151).

7. Appareil de sécurisation de porte selon l'une quelconque des revendications 2 à 6, dans lequel l'unité (180) qui empêche l'ouverture forcée de la porte comprend en outre un arrêt (198) pour limiter une position de mouvement du guide montant et descendant (166).

8. Appareil de sécurisation de porte selon la revendication 7, dans lequel l'arrêt (198) comprend une partie évidée (199) ménagée sur la paroi (150a) de la base principale (150), sur laquelle la base réceptrice (151) est agencée de manière à guider la seconde saillie (181).

9. Lecteur de disque comprenant :
un assemblage de panneau frontal (130) comprenant un panneau frontal (130) comprenant une ouverture (133), une porte (140) montée à pivotement sur le panneau frontal (130) conçue pour pivoter entre une position d'ouverture, dans laquelle l'ouverture (133) doit être ouverte, et une position de fermeture, dans laquelle l'ouverture (133) doit être fermée, et un élément élastique pour appliquer une force élastique à la porte (140) dans une direction le long de laquelle la porte (140) pivote vers la position de fermeture ;
un corps comprenant un plateau de disque pour y installer un disque et conçu pour être retiré du panneau frontal (130) ou y être inséré à travers l'ouverture (133) et un guide montant et descendant (166) conçu pour faire monter et descendre une base réceptrice (151) sur laquelle est agencée un plateau tournant (153) pour y recevoir le disque ; et
un appareil de sécurisation de porte comprenant une unité (180) pour empêcher l'ouverture forcée de la porte, qui est agencé entre la porte (140) et le guide montant et descendant (166), et pour limiter de manière sélective le pivotement de la porte (140) en fonction d'une position du guide montant et descendant (166).

10. Lecteur de disque selon la revendication 9, dans lequel l'unité destinée à empêcher l'ouverture forcée de la porte (140) comprend :
une première saillie (185) agencée sur une surface interne de la porte (140) ; et
une seconde saillie (181) agencée sur le guide montant et descendant (166) et se déplaçant en fonction de la position du guide montant et descendant (166) entre une position d'interception, dans laquelle la première saillie (185) est interceptée de manière à l'empêcher de se déplacer avec la porte (140), et une position de libération, dans laquelle la première saillie (185) est autorisée à se déplacer.

11. Lecteur de disque selon la revendication 10, dans lequel la seconde saillie (181) est en position d'interception pour limiter le pivotement de la porte (140) lorsque le guide montant et descendant (166) élève la base réceptrice (151) jusqu'à ce qu'elle soit en position de placement de disque pour placer un disque sur le plateau tournant (153) et est en position de libération pour permettre à la porte (140) de pivoter lorsque le guide montant et descendant (166) quitte la position de placement de disque.

12. Lecteur de disque selon la revendication 11, dans lequel :
la première saillie (185) comprend une pièce saillante (186) dépassant de la surface interne de la porte (140) à l'intérieur du panneau frontal (130) et comprenant au moins un plan, et
la seconde saillie (181) comprend une barre saillante (183) s'étendant vers la porte (140) et comprenant un plan en regard du plan de la pièce saillante (186) lorsque la seconde saillie (181) est en position d'interception.

13. Lecteur de disque selon la revendication 12, dans lequel la barre saillante (183) comprend un guide de mouvement (195) pour guider un mouvement de la barre saillante (183) entre la position d'interception et la position de libération.

14. Lecteur de disque selon la revendication 13, dans lequel le guide de mouvement (195) comprend une rainure de guidage (196) ménagée à proximité du plan de la barre saillante (183) de manière à être guidée le long d'une paroi (150a) d'une base principale (150) sur laquelle est agencée la base réceptrice (151).

15. Lecteur de disque selon l'une quelconque des revendications 10 à 14, dans lequel l'unité (180) qui empêche l'ouverture forcée de la porte comprend en outre un arrêt (198) pour limiter une position de mouvement du guide montant et descendant (166).

16. Lecteur de disque selon la revendication 15, dans lequel l'arrêt (198) comprend une partie évidée (199) ménagée sur la paroi (150a) de la base principale (150), sur laquelle la base réceptrice (151) est agencée de manière à guider la seconde saillie (181).

17. Procédé de sécurisation de porte pour un lecteur de disque, comprenant les étapes suivantes :
on inclut une ouverture (133) dans un panneau frontal (130) ;
on agence une porte (140) à pivotement sur le panneau frontal (130) ;
on fait monter et descendre une base réceptrice (151), sur laquelle est agencé un plateau tournant (153) pour y placer un disque ; et
on empêche l'ouverture forcée de la porte (140) en limitant de manière sélective le pivotement de la porte (140) en fonction d'une position d'un guide montant et descendant (166).
